**Europäisches Patentamt**

**European Patent Office**

**Office européen des brevets**

(19)

(11) Veröffentlichungsnummer: **0 198 339 B1**

(12) **EUROPÄISCHE PATENTSCHRIFT**

(45) Veröffentlichungstag der Patentschrift:
30.08.89

(51) Int. Cl.⁴: **G05D 23/275**

(21) Anmeldenummer: **86104516.9**

(22) Anmeldetag: **02.04.86**

(54) Zusatzgerät für mehrere elektrische Direktheizgeräte.

(30) Priorität: **16.04.85 NO 851511**

(43) Veröffentlichungstag der Anmeldung:
**22.10.86 Patentblatt 86/43**

(45) Bekanntmachung des Hinweises auf die Patenterteilung:
**30.08.89 Patentblatt 89/35**

(84) Benannte Vertragsstaaten:
**AT CH DE LI SE**

(56) Entgegenhaltungen:
**DE-A- 3 123 523**
**FR-A- 2 212 913**

(73) Patentinhaber: **Siemens Aktiengesellschaft, Wittelsbacherplatz 2, D-8000 München 2(DE)**

(72) Erfinder: **Amundsen, Aage, Skytterveien 26, N-7080 Heimdal(NO)**

## Beschreibung

Die Erfindung betrifft ein Zusatzgerät für mehrere elektrische Heizgeräte nach dem Oberbegriff des Patentanspruches 1.

Ein solches Gerät ist aus der DE-A 1 3 123 523 bekannt. Es dient dazu, mehrere voneinander getrennt an das Speisenetz anschließbare Direktheizgeräte derart zu steuern, daß diese in Abhängigkeit von einem thermostatisch gesteuerten Hauptheizgerät mit einer gewissen Zeitverzögerung ein- und ausschalten. Damit soll erreicht werden, daß die insgesamt vorhandene elektrische Leistung nicht schlagartig an das Netz geht bzw. von diesem getrennt wird sondern in zeitlich versetzten Abstufungen. Dies soll dadurch geschehen, daß jedem der Zusatzheizgeräte ein Thermoschaltelement zugeordnet wird, welches vom Hauptheizgerät in der Weise beeinflußt wird, daß der Thermostat während der Betriebsphase des Hauptheizgerätes von diesem gesteuert verzögert anspricht und dabei das Zusatzheizgerät einschaltet. Nach der Unterbrechung des Hauptheizgerätes spricht der Thermoschalter des jeweiligen Zusatzheizgerätes wiederum verzögert an, so daß auch das Ausschalten zeitversetzt erfolgt.

In der FR-A 2 212 913 ist ein Direktheizgerät mit zwei den unterschiedlichen Heizkreisen zugeordneten Heizwicklungen beschrieben, die von einer in einem Zusatzgerät angeordneten thermostatischen Steuereinrichtung in gegenseitiger Abhängigkeit gesteuert werden. Einer dieser Thermostaten wird in Abhängigkeit von der Raumtemperatur und ein zweiter, dazu parallel angeordneter, in Abhängigkeit vom Stromfluß durch die Zusatzheizwicklung gesteuert. Dabei dient der Hauptheizkreis zur Raumtemperaturregelung auf einen Grundwert, während der Zusatzheizkreis eine individuelle Temperaturregelung ermöglicht. Dabei schaltet der Zusatzheizkreis bei Erreichen der individuell gewählten Temperatur auch den Hauptheizkreis aus, der nach Unterschreiten der eingestellten Minimaltemperatur durch den Raumtemperaturthermostaten wieder eingeschaltet wird.

Elektrische Direktheizgeräte sind im allgemeinen mit einem Thermostat ausgestattet, der das zugeordnete Direktheizgerät einschaltet, wenn die Raumtemperatur unter einer Solltemperatur liegt und wieder ausschaltet, wenn die Raumtemperatur die Solltemperatur um einen gewissen Betrag überschreitet. Wenn in einem Raum mehrere elektrische Direktheizgeräte vorhanden sind, so würde an sich ein einziger Thermostat zur Steuerung aller Direktheizgeräte eines Raumes ausreichen. Im Handel sind daher Direktheizgeräte sowohl mit als auch ohne Thermostaten erhältlich. In dem mit einem Thermostat versehenen Direktheizgerät wird vom Verbindungspunkt des Thermostats mit dem Heizkörper eine Leitung abgezweigt, an die diejenigen Direktheizgeräte angeschlossen werden, die keine Thermostate aufweisen. Alle so verbundenen Direktheizgeräte werden daher parallel ein- und ausgeschaltet. Die gesamte Installation wird billiger, da in einem Raum mit mehreren Direktheizgeräten nur ein einziger Thermostat vorhanden sein muß.

Nachteilig bei dieser Anordnung ist jedoch, daß die Belastbarkeit handelsüblicher Thermostate nicht für eine Vielzahl von Direktheizgeräten ausreicht. Außerdem setzt die bekannte Anordnung unterschiedliche Schaltungen für Direktheizgeräte mit und ohne Thermostat voraus, da die Direktheizgeräte mit Thermostat eine zusätzliche Anschlußleitung mit Anschlußklemme aufweisen.

Bei der vorliegenden Erfindung geht es gegenüber dem aus DE-A 1 3 123 523 bekannten Gerät nicht um ein verzögertes Ein- oder Ausschalten verschiedener Direktheizgeräte. Vielmehr soll eine Möglichkeit geschaffen werden, um mehrere Direktheizgeräte im Originalzustand, also ohne diese speziell ausbilden oder herrichten zu müssen, vom Thermostaten eines Hauptheizgerätes steuerbar zu machen.

Der Erfindung liegt demzufolge die Aufgabe zugrunde, ein Zusatzgerät so zu gestalten, daß es einerseits an das Hauptheizgerät, ohne dieses umstalten zu müssen, anschließbar ist und daß andererseits die Zusatzheizgeräte, ohne daß in diese eingegriffen werden müßte, an das Zusatzgerät anschließbar sind.

Diese Aufgabe wird durch die im Patentanspruch 1 angegebene Erfindung gelöst. Mit diesem Zusatzgerät wird also abgefragt, ob das mit einem Thermostat versehene Direktheizgerät eingeschaltet ist. Abhängig vom Ergebnis der Abfrage werden auch die an das Zusatzgerät angeschlossenen weiteren Direktheizgeräte eingeschaltet. Dabei muß das mit einem Thermostaten versehene Direktheizgerät für den Anschluß des Zusatzgerätes nicht besonders vorbereitet sein und der Thermostat wird durch das Zusatzgerät nicht belastet. Diese Anordnung wird dann besonders vorteilhaft, wenn man elektronisch (z.B. mikroprozessor-gesteuerte) Thermostate benutzt, die z.B. zeitgesteuert sind. Solche Thermostate sind meist sehr kostspielig und es ergibt sich eine erhebliche Einsparung dadurch, daß man nicht alle in einem Raum verwendeten Direktheizgeräte mit solchen Thermostaten ausstatten muß.

Als Halbleiterschalter wird vorteilhafterweise ein Triac benutzt, dessen Gatekreis über einen Serienwiderstand von der Sekundärwicklung des Stromsensors gespeist ist.

Zum Schutz des Halbleiterschalters von Netz-Überspannungen kann diesem in einer weiteren Ausführung der Erfindung ein Überspanungsableiter parallel geschaltet werden.

Anhand eines Ausführungsbeispieles wird die Erfindung im folgenden näher erläutert.

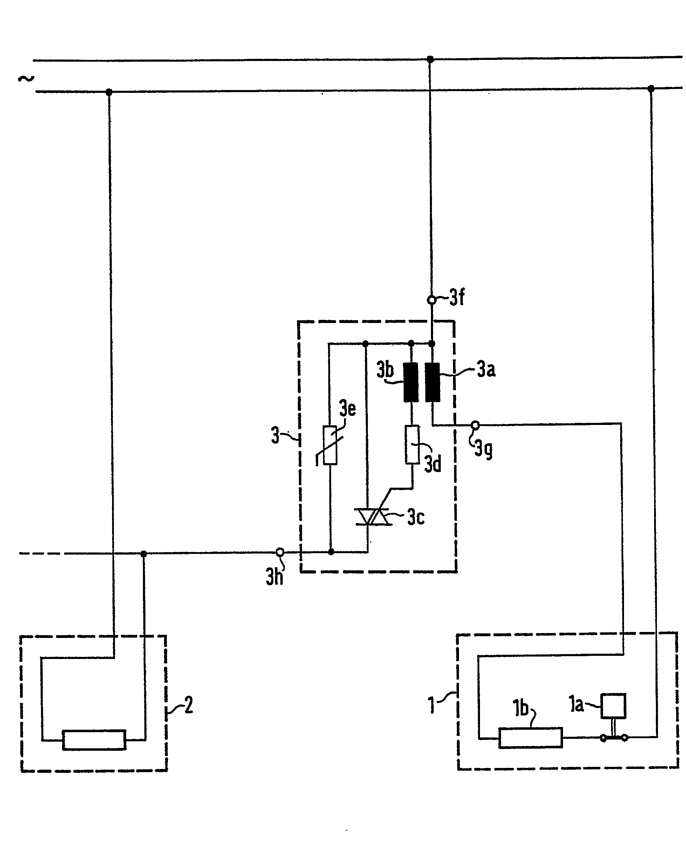

In der Figur sind zwei Direktheizgeräte 1 und 2 dargestellt, wobei nur das Direktheizgerät 1 einen Thermostat 1a aufweist. Die Direktheizgeräte 1 und 2 können ansonsten identisch aufgebaut sein, wobei der Thermostat 1a z.B. steckbar ist und im Falle des Direktheizgerätes 2 durch eine Kurzschlußbrücke ersetzt ist. Der Heizwiderstand 1b des Direktheizgerätes 1 ist über den Thermostaten 1a einerseits direkt mit einer ersten Phase der Netzleitung und andererseits - über die Anschlußklemmen 3g, 3f des Zusatzgerätes 3 mit der zweiten Phase der Netzleitung verbunden. An die Anschlußklemmen 3g, 3f ist im Zusatzgerät 3 die Primärwicklung 3a eines Stromtransformators angeschlossen. Damit liegt die Primärwicklung 3a in Reihe mit dem Heizwiderstand 1b des Direktheizgerätes 1 an der Netzleitung. Die Sekundärwicklung 3b des Stromtransformators ist einerseits an die Anschlußklemme 3f und andererseits über einen Widerstand 3d an das Gate eines Triacs 3c angeschlossen. Bei entsprechender Dimensionierung des Stromtransformators kann auf den Widerstand 3d auch verzichtet werden. Ein Hauptanschluß des Triacs 3c ist ebenfalls mit der Anschlußklemme 3f und der zweite Hauptanschluß des Triacs 3c mit einer Anschlußklemme 3h verbunden. Im Ausführungsbeispiel ist der Triac 3c mit einem Varistor 3e als Überspannungsableiter überbrückt. Mit der Anschlußklemme 3h ist im Ausführungsbeispiel ein Anschluß des Direktheizgeräts 2 ohne Thermostat verbunden. Selbstverständlich können noch mehrere Direktheizgeräte ohne Thermostate mit der Anschlußklemme 3h verbunden werden, was in der Figur mit einer gestrichelten Linie angedeutet wird. Jeweils die zweiten Anschlüsse der Direktheizgeräte werden direkt mit der zweiten Phase der Netzleitung verbunden.

Sobald der Thermostat 1a einschaltet, fließt der Betriebsstrom des Direktheizgerätes 1 über die Primärwicklung 3a. Der Stromtransformator wird so ausgelegt, daß die magnetische Hystereseschleife des Kerns in einem kleinen Winkel rund um den Null-Durchgang des Stromes durchlaufen wird. Damit entsteht in der Sekundärwicklung 3b eine kurze Stromspitze synchron zum Null-Durchgang des Stromes. Als besonders geeignet für den Stromtransformator hat sich ein Ferrit-Ringkern-Transformator erwiesen.

Mit der kurzen Stromspitze in der Sekundärwicklung wird ein Zündimpuls für den Triac 3c erzeugt. Damit werden auch das Direktheizgerät 2 sowie gegebenenfalls weitere Direktheizgeräte eingeschaltet. Wenn der Thermostat 1a ausschaltet, fließt durch die Primärwicklung 3a kein Strom mehr und der Triac 3c sperrt wieder.

Mit dem dargestellten Zusatzgerät wird der Thermostat 1a durch Steuerung weiterer Direktheizgeräte nicht belastet. Die Anzahl der steuerbaren Direktheizgeräte hängt lediglich von der Dimensionierung des Zusatzgerätes ab. Falls bei einer Vielzahl anzusteuernder Direktheizgeräte die Belastbarkeit eines einzelnen Zusatzgerätes nicht ausreicht, kann man einem beliebigen Direktheizgerät ein weiteres Zusatzgerät 3 in Reihe schalten, das dann wieder weitere Direktheizgeräte ansteuert. Auf diese Weise können also mit einem einzigen Thermostat beliebig viele Direktheizgeräte angesteuert werden, ohne daß der Thermostat belastet wird. Das Zusatzgerät 3 kann sehr klein aufgebaut werden, so daß es sich problemlos unterbringen läßt. Dabei ist auch von Vorteil, daß es geräuschlos schaltet.

Der Strom durch die Primärwicklung 3a ist von der Leistung des angeschlossenen Direktheizgerätes 1 abhängig. Das Zusatzgerät 3 läßt sich jedoch so auslegen, daß eine einwandfreie Funktion für alle in der Praxis auftretenden Geräteleistungen gewährleistet ist. Damit kommt man mit einem einzigen Typ des Zusatzgerätes für alle Direktheizgeräte aus.

Das mit dem Thermostat 1a bestückte Direktheizgerät 1 muß für den Anschluß des Zusatzgerätes nicht besonders vorbereitet sein, sondern es kann ein normales Standardgerät verwendet werden.

## Patentansprüche

1. Zusatzgerät für mehrere elektrische Direktheizgeräte (1, 2), von denen eines als Hauptheizgerät (1) einen Thermostaten (1a) aufweist, wobei das Zusatzgerät (3) einen Stromsensor (3a, 3b) enthält, der vom Strom des Heizwiderstandes (1b) des Hauptheizgerätes (1) durchflossen ist und der Stromsensor (3a, 3b) einen Halbleiterschalter (3c) zum Ein- und Ausschalten zusätzlicher Direktheizgeräte (2) betätigt, dadurch gekennzeichnet, daß der Stromsensor ein Stromtransformator (3a, 3b) ist, dessen Primärwicklung (3a) mit dem thermostatisch geregelten Hauptheizgerät (1) in Serie geschaltet ist und dessen Sekundärwicklung (3b) im Steuerkreis des Halbleiterschalters (3c) angeordnet ist.

2. Zusatzgerät nach Anspruch 1, dadurch gekennzeichnet, daß der Stromtransformator (3a, 3b) ein Ferrit-Ringkern-Transformator ist.

3. Zusatzgerät nach Anspruch 1 oder 2, dadurch gekennzeichnet, daß der Halbleiterschalter (3c) ein Triac ist, dessen Gatekreis über einen Serienwiderstand (3d) von der Sekundärwicklung (3b) des Stromtransformators gespeist ist.

4. Zusatzgerät nach einem der Ansprüche 1 bis 3, dadurch gekennzeichnet, daß dem Halbleiterschalter (3c) ein Überspannungsableiter (3e) parallel geschaltet ist.

## Claims

1. Supplementary device for several electrical direct heating devices (1, 2), one of which as main heating device (1) has a thermostat (1a), the supplementary device (3) containing a current sensor (3a, 3b) through which the current of the heating resistor (1b) of the main heating device (1) flows and the current sensor (3a, 3b) operating a semiconductor switch (3c) for switching on and switching off additional direct heating devices (2), characterized in that the current sensor is a current transformer (3a, 3b), the primary winding (3a) of which is series-connected to the thermostatically regulated main heating device (1) and the secondary winding (3b) of which is arranged in the control circuit of the semiconductor switch (3c).

2. Supplementary device according to claim 1, characterized in that the current transformer (3a, 3b) is a ferrite annular core transformer.

3. Supplementary device according to claim 1 or 2, characterized in that the semiconductor switch (3c) is a triac, the gate circuit of which is supplied by means of a series resistor (3d) from the secondary winding (3b) of the current transformer.

4. Supplementary device according to one of claims 1 to 3, characterized in that an overvoltage diverter (3e) is connected in parallel with the semiconductor switch (3c).

## Revendications

1. Dispositif auxiliaire pour plusieurs appareils électriques de chauffage direct (1, 2), dont l'un utilisé comme appareil de chauffage principal (1), comporte un thermostat (1a), dispositif additionnel (3) contenant un détecteur de courant (3a, 3b), qui est parcouru par le courant de la résistance chauffante (1b) du dispositif de chauffage principal (1) et actionne un interrupteur à semiconducteurs (3c) servant à brancher et à débrancher des appareils additionnels de chauffage direct (2), caractérisé par le fait que le détecteur de courant est un transformateur d'intensité (3a, 3b), dont l'enroulement primaire (3a) est branché en série avec le dispositif de chauffage principal (1) à régulation thermostatique et dont l'enroulement secondaire (3b) est monté dans le circuit de commande de l'interrupteur à semiconducteurs (3c).

2. Dispositif auxiliaire suivant la revendication 1, caractérisé par le fait que le transformateur d'intensité (3a, 3b) est un transformateur à noyau annulaire de ferrite.

3. Dispositif auxiliaire suivant la revendication 1 ou 2, caractérisé par le fait que l'interrupteur à semiconducteurs (3c) est un triac, dont le circuit de grille est alimenté, par l'intermédiaire d'une résistance série (3c), par l'enroulement secondaire (3b) du transformateur d'intensité. 4. Dispositif auxiliaire suivant l'une des revendications 1 à 3, caractérisé par le fait qu'un dispositif (3e) de dérivation des surtensions est branché en parallèle avec l'interrupteur à semiconducteurs (3c).

3f

3b 3a

3e

3

3g

3d

3c

3h

2

1 1b 1a